# FASCICULE DE BREVET EUROPEEN

(11) **EP 3 885 994 B1**
(45) Date de publication et mention de la délivrance du brevet: **20.07.2022**
(21) Numéro de dépôt: 21164615.3
(22) Date de dépôt: 24.03.2021
(51) Int. Cl.: G06K 19/07, G06K 19/073, G06K 19/077, G06F 21/77, G06F 21/32

(54) **CARTE À MICROCIRCUIT**
MIKROSCHALTKREIS-KARTE
MICROCIRCUIT BOARD

(30) Priorité: 27.03.2020 FR 2003073
(43) Date de publication de la demande: 29.09.2021
(73) Titulaire: STMicroelectronics (Rousset) SAS, 13790 Rousset (FR)
(72) Inventeur: ROUY, Olivier, 13790 PEYNIER (FR)
(74) Mandataire: Cabinet Beaumont

(56) Documents cités:
- EP-A1- 3 627 395
- WO-A1-2017/001746
- WO-A1-2019/175174
- US-A1- 2016 203 346

## Description

### Domaine technique

La présente description concerne de façon générale les dispositifs électroniques et, plus particulièrement, les cartes à microcircuit.

### Technique antérieure

De nombreuses applications font usage de cartes à microcircuit, par exemple des cartes de paiement, des cartes de transport, des cartes d'identification personnelle, etc. Parmi les cartes à microcircuit actuelles, on connaît notamment des cartes équipées d'un capteur biométrique. Le capteur biométrique permet typiquement d'effectuer des vérifications d'identité lors de chaque utilisation de la carte. Les cartes à microcircuit dotées d'un capteur biométrique actuelles sont généralement complexes et coûteuses à concevoir et à fabriquer.

Le document WO 2017/001746 décrit une entité électronique et procédé mis en œuvre dans une telle entité électronique. Les caractéristiques dans le préambule de la revendication 1 sont connues de WO 2017/001746.

### Résumé de l'invention

Il existe un besoin d'améliorer les cartes à microcircuit actuelles comportant un capteur biométrique.

Un mode de réalisation pallie tout ou partie des inconvénients des cartes à microcircuit comportant un capteur biométrique connues.

L'invention prévoit une carte à microcircuit comportant :
un premier microcontrôleur ;
un deuxième microcontrôleur ;
au moins un module de communication avec l'extérieur de la carte ; et
un capteur biométrique,
dans laquelle :
   toute communication avec l'extérieur de la carte transite par le premier microcontrôleur ;
   toute communication entre le capteur et le deuxième microcontrôleur transite par le premier microcontrôleur ; et
   le deuxième microcontrôleur (118) n'intervient pas dans les communications avec l'extérieur de la carte (100).

Selon un mode de réalisation, le deuxième microcontrôleur est un microcontrôleur sécurisé.

Selon un mode de réalisation, le deuxième microcontrôleur est dédié à traiter et à mémoriser des données sécurisées.

Selon un mode de réalisation, le deuxième microcontrôleur possède une capacité mémoire inférieure à celle du premier microcontrôleur.

Selon un mode de réalisation, le premier microcontrôleur est relié, de préférence connecté, à deux modules de communication vers l'extérieur de la carte :
un premier module de communication en champ proche ; et
un deuxième module de communication avec contact.

Selon un mode de réalisation, le premier microcontrôleur est configuré pour mettre en œuvre :
un protocole de communication en champ proche ; et
un protocole de communication avec contact.

Selon un mode de réalisation, le premier microcontrôleur comporte :
une unité de gestion d'énergie ; et
une unité de séquençage d'opérations.

Selon un mode de réalisation, le premier microcontrôleur est configuré pour commander :
le deuxième microcontrôleur ;
le module de communication ; et
le capteur.

Selon un mode de réalisation, le premier microcontrôleur est configuré pour gérer une alimentation électrique du deuxième microcontrôleur.

Selon un mode de réalisation, le premier microcontrôleur est configuré pour traiter des données provenant du capteur.

Selon un mode de réalisation, le premier microcontrôleur et le deuxième microcontrôleur font partie d'une même puce.

Selon un mode de réalisation, le capteur est un capteur d'empreintes digitales.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique et sous forme de blocs, un mode de réalisation d'une carte à microcircuit communiquant avec un lecteur ; et
la figure 2 représente, de façon schématique et sous forme de blocs, un exemple d'architecture fonctionnelle de la carte de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les échanges de données entre le lecteur et la carte ainsi que les algorithmes cryptographiques mis en œuvre par le microcontrôleur sécurisé de la carte ne sont pas détaillés, les modes de réalisation décrits étant compatibles avec les échanges de données usuels entre un lecteur et une carte et avec les algorithmes cryptographiques usuels. En outre, le traitement des données provenant du capteur biométrique de la carte n'a pas été détaillé, les modes de réalisation étant compatibles avec les traitements usuels de données provenant de capteurs biométriques.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures.

Sauf précision contraire, les expressions "environ", "approximativement", "sensiblement", et "de l'ordre de" signifient à 10 % près, de préférence à 5 % près.

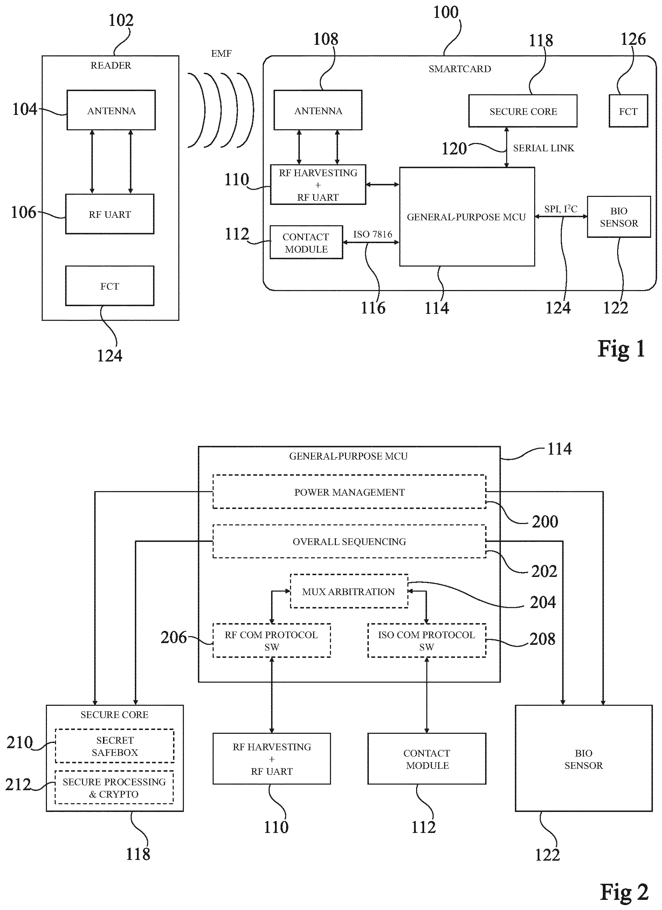

La figure 1 représente, de façon schématique et sous forme de blocs, un mode de réalisation d'une carte à microcircuit 100 (SMARTCARD) communiquant avec un lecteur 102 (READER). La carte 100 est par exemple une carte bancaire de paiement sans contact, une carte de transport, une carte d'identification personnelle, etc. Le lecteur 102 est par exemple un terminal de paiement, une borne de validation de titre de transport, une borne de contrôle d'accès personnel, etc.

Le lecteur 102 comporte une antenne 104 (ANTENNA). L'antenne 104 est en particulier adaptée à émettre un champ électromagnétique (EMF), par exemple un champ radiofréquence. Dans le cas d'une transmission, le champ EMF est par exemple modulé et/ou démodulé par un circuit ou module émetteurrécepteur asynchrone 106 (RF UART), par exemple un émetteurrécepteur asynchrone universel, du lecteur 102. Dans un cas où la carte 100 est située à portée du lecteur 102, le champ électromagnétique radiofréquence EMF modulé par le lecteur 102 peut alors être capté par une antenne 108 (ANTENNA) de la carte 100.

On a arbitrairement représenté en figure 1 le cas d'un lecteur 102 comportant un module 106 de communication en champ proche. Ceci n'est toutefois pas limitatif. En variante, le lecteur 102 comporte un autre module de communication, par exemple un module de communication avec contact conforme à la norme ISO/IEC 7816. Selon les applications, le lecteur 102 comporte ainsi l'un ou l'autre des modules, parmi le module 106 et le module de communication avec contact (non représenté), ou les deux modules à la fois.

La carte 100 comporte un premier circuit ou module de communication 110 (RF HARVESTING + RF UART) avec l'extérieur de la carte 100. Le premier module de communication 110 de la carte 100 est par exemple analogue au module 106 du lecteur 102. Le module 110 est par exemple adapté à alimenter la carte 100 en énergie électrique à partir du champ EMF capté par l'antenne 108. Bien que cela ne soit pas représenté, l'antenne 108 peut en pratique être reliée au module 110 par l'intermédiaire d'un circuit d'adaptation.

La carte 100 comporte en outre un deuxième circuit ou module de communication 112 (CONTACT MODULE) avec l'extérieur de la carte 100. Le deuxième module de communication 112 est par exemple un module de communication avec contact. Le module 112 permet par exemple à la carte 100 de communiquer avec contact avec le lecteur 102, ou de communiquer avec des lecteurs analogues au lecteur 102 mais dépourvus d'antenne 104 et de module 106 de communication en champ proche.

En variante, la carte 100 ne comporte qu'un seul module de communication parmi les modules 110 et 112, par exemple le module 112 de communication avec contact.

Selon un mode de réalisation, les modules de communication 110 et 112 de la carte 100 sont pilotés ou commandés par un premier microcontrôleur 114 (GENERAL-PURPOSE MCU). Les modules 110 et 112 de communication de la carte 100 sont par exemple chacun reliés, de préférence connectés, au microcontrôleur 114. En particulier, le module 112 de communication avec contact est par exemple connecté au microcontrôleur 114 par l'intermédiaire d'une liaison 116 (ISO 7816) conforme à la norme ISO 7816.

La carte 100 comporte un deuxième microcontrôleur 118 (SECURE CORE). Le deuxième microcontrôleur 118 est relié, de préférence connecté, au premier microcontrôleur 114 par l'intermédiaire d'une liaison série 120 (SERIAL LINK).

Selon un mode de réalisation, le deuxième microcontrôleur 118 est un microcontrôleur sécurisé. En particulier, le microcontrôleur 118 est dédié à traiter et à mémoriser des données sécurisées ou secrètes, c'est-à-dire des données dont on souhaite réserver l'accès à certains utilisateurs ou circuits. Le microcontrôleur 118 a notamment pour fonction de protéger des données secrètes, par exemple des données relatives à un propriétaire de la carte 100, et d'effectuer des opérations sur ou à l'aide de ces données secrètes. Le microcontrôleur 118 est en particulier configuré pour faire en sorte que les données secrètes qu'il manipule ne puissent être découvertes par un attaquant ou pirate.

À titre d'exemple, le deuxième microcontrôleur 118 possède une capacité mémoire inférieure à celle du premier microcontrôleur 114. En outre, le microcontrôleur 118 est par exemple doté d'une puissance de calcul inférieure à celle du microcontrôleur 114. Selon un mode de réalisation, le microcontrôleur 114 est capable d'effectuer davantage d'opérations en virgule flottante par seconde que le microcontrôleur 118.

Selon un mode de réalisation, le premier microcontrôleur 114 est configuré pour piloter ou commander le deuxième microcontrôleur 118. Lors d'échanges de données par la liaison série 120, le microcontrôleur 114 est par exemple configuré en tant que maître tandis que le microcontrôleur 118 est configuré en tant qu'esclave.

De façon générale, toute communication avec l'extérieur de la carte 100 transite par le premier microcontrôleur 114. En particulier, le deuxième microcontrôleur 118 ne peut éventuellement communiquer avec l'extérieur de la carte 100, par exemple avec le lecteur 102, qu'en passant par le premier microcontrôleur 114.

La carte 100 comporte en outre un capteur biométrique 122 (BIO SENSOR), par exemple un capteur d'empreintes digitales. Le capteur 122 est relié, de préférence connecté, au premier microcontrôleur 114 par l'intermédiaire d'une liaison 124 (SPI, I²C), par exemple un bus de données série SPI (Serial Peripheral Interface, en anglais) ou un bus I²C (Inter-Integrated Circuit, en anglais). Le premier microcontrôleur 114 est de préférence configuré pour traiter des données provenant du capteur biométrique 122.

Le capteur 122 n'est pas directement relié au deuxième microcontrôleur 118. En particulier, tout échange éventuel de données, c'est-à-dire toute communication, entre le capteur 122 et le deuxième microcontrôleur 118 transite par le premier microcontrôleur 114. En d'autres termes, le capteur 122 ne peut pas échanger des données directement avec le deuxième microcontrôleur 118 sans passer par le premier microcontrôleur 114. On prévoit alors avantageusement un microcontrôleur 114 capable de manipuler de grandes quantités de données provenant du capteur biométrique 122, en particulier des données relatives à un filtrage d'images dans le cas d'un capteur 122 d'empreintes digitales.

De manière générale, le premier microcontrôleur 114 est configuré pour commander :
le deuxième microcontrôleur 118 ;
les modules de communication 110 et 112 ; et
le capteur biométrique 122.

Le lecteur 102 et la carte 100 peuvent respectivement comporter d'autres circuits, par exemple des circuits spécifiques à l'application. Ces circuits sont, en figure 1, symbolisés par un bloc 124 (FCT), pour le lecteur 102, et par un bloc 126 (FCT), pour la carte 100.

On aurait pu penser prévoir une carte analogue à la carte 100, mais comportant par exemple, à la place des microcontrôleurs 114 et 118, un seul microcontrôleur. On aurait par exemple pu prévoir que ce microcontrôleur soit un microcontrôleur sécurisé permettant non seulement de mémoriser et de traiter des données secrètes, mais aussi d'effectuer des opérations ne portant pas sur des données secrètes. Ce microcontrôleur serait par exemple notamment utilisé pour traiter des données provenant du capteur 122 et gérer des communications avec l'extérieur de la carte. Toutefois, les microcontrôleurs sécurisés sont généralement plus onéreux à concevoir, à fabriquer et à programmer que les microcontrôleurs non adaptés à manipuler des données secrètes. Par conséquent, l'utilisation d'un seul microcontrôleur afin d'assurer des fonctions analogues à celles des microcontrôleurs 114 et 118 réunis risquerait de provoquer une augmentation de complexité et de coût de fabrication de la carte.

Un avantage de la carte 100 tient au fait que le microcontrôleur 118 sécurisé est essentiellement utilisé pour traiter et mémoriser des données secrètes. Cela permet par exemple avantageusement de prévoir la mise en œuvre d'un microcontrôleur 118 sécurisé doté d'une puissance de calcul et/ou d'une capacité mémoire moindres que dans le cas d'une carte dans laquelle le microcontrôleur 118 serait en outre configuré pour mémoriser et/ou traiter des données non sécurisées, par exemple des données provenant du capteur 122 et/ou des données à échanger avec les modules de communication 110 et 112. Cela permet par ailleurs à un fabricant de la carte 100 d'intégrer le microcontrôleur 118 dans une ou plusieurs applications sans que le fabricant n'ait besoin de posséder des compétences spécifiques au développement d'applications exécutables par des microcontrôleurs sécurisés.

Un autre avantage de la carte 100 réside dans le fait que le partage de tâches entre le microcontrôleur 114 et le microcontrôleur 118 sécurisé conduit à une plus faible complexité et à une plus grande flexibilité dans le développement de la carte 100. Il est par exemple possible de modifier des logiciels configurés pour gérer des échanges de données avec l'extérieur de la carte 100 sans que cela ne vienne impacter des logiciels exécutés par le microcontrôleur 118. Cela permet par exemple avantageusement de n'avoir à certifier à nouveau les logiciels exécutés par le microcontrôleur 118 que dans des cas, généralement peu fréquents, où l'on a effectué des modifications portant sur la mémorisation ou le traitement de données secrètes.

On aurait aussi pu penser prévoir une carte analogue à la carte 100, mais dans laquelle le microcontrôleur sécurisé 118 permettrait non seulement de mémoriser et de traiter des données secrètes, mais aussi de gérer des communications avec l'extérieur de la carte. Dans ce cas, le microcontrôleur 114 serait par exemple dédié au traitement des données en provenance du capteur 122, et n'assurerait en particulier aucune fonction de communication avec l'extérieur de la carte. Toutefois, cela nécessiterait de prévoir un microcontrôleur sécurisé 118 plus performant et/ou disposant d'une capacité mémoire plus importante, donc généralement plus coûteux, que dans le cas de la carte 100. Cela contraindrait en outre le fabricant de la carte à effectuer des démarches complexes de certification après chaque modification des fonctionnalités permettant de gérer les échanges de données avec l'extérieur de la carte.

La figure 2 représente, de façon schématique et sous forme de blocs, un exemple d'architecture fonctionnelle de la carte 100 de la figure 1.

Dans l'exemple représenté, le premier microcontrôleur 114 (GENERAL-PURPOSE MCU) comporte un module ou unité de gestion d'énergie 200 (POWER MANAGEMENT). L'unité 200 de gestion d'énergie est par exemple configurée pour gérer l'alimentation du premier microcontrôleur 114 et/ou d'au moins un élément de la carte 100 (figure 1) choisi parmi le deuxième microcontrôleur 118 (SECURE CORE), le module de communication 110 (RF HARVESTING + RF UART), le module de communication 112 (CONTACT MODULE) et le capteur biométrique 122 (BIO SENSOR). En pratique, l'unité 200 commande par exemple un état ouvert ou fermé d'au moins un interrupteur (non représenté), externe au microcontrôleur 114. Cet interrupteur est adapté à couper et à établir l'alimentation électrique du microcontrôleur 118 et du capteur biométrique 122 depuis le module 110. De manière générale, le premier microcontrôleur 114 est de préférence configuré pour gérer l'alimentation électrique du deuxième microcontrôleur 118.

Le premier microcontrôleur 114 comporte en outre un module ou unité d'ordonnancement ou de séquençage d'opérations 202 (OVERALL SEQUENCING). L'unité 202 de séquençage d'opérations est par exemple configurée pour attribuer des tâches aux différents éléments de la carte 100 et/ou pour gérer des priorités d'exécution de ces tâches.

En pratique, les unités 200 et 202 du premier microcontrôleur 114 peuvent être matérielles et/ou logicielles.

Le premier microcontrôleur 114 de la carte 100 est par exemple configuré pour mettre en œuvre un protocole de communication en champ proche et un protocole de communication avec contact. Dans l'exemple représenté, le microcontrôleur 114 comporte un multiplexeur 204 (MUX ARBITRATION) permettant d'activer sélectivement l'exécution d'un logiciel 206 (RF COM PROTOCOL SW) de communication en champ proche ou d'un logiciel 208 (ISO COM PROTOCOL SW) de communication avec contact. Le logiciel 206, 208 est par exemple configuré pour piloter le module de communication 110, 112 associé.

Dans l'exemple représenté, le deuxième microcontrôleur 118 comporte une zone mémoire sécurisée 210 (SECRET SAFEBOX). À titre d'exemple, la zone mémoire 210 permet de mémoriser des clés et des données secrètes, par exemple au moins une empreinte digitale dite de référence à laquelle sont comparées des données issues de traitements d'images acquises par le capteur 122.

Dans l'exemple représenté, le deuxième microcontrôleur 118 comporte en outre une unité de traitement 212 (SECURE PROCESSING & CRYPTO) sécurisée. À titre d'exemple, l'unité 212 permet d'exécuter au moins un algorithme de chiffrement, de signature ou d'authentification, plus généralement appelé algorithme cryptographique.

Bien que l'on ait représenté, en figures 1 et 2, les microcontrôleurs 114 et 118 par des blocs distincts, les microcontrôleurs 114 et 118 peuvent, en pratique, faire partie d'une même puce. En variante, les microcontrôleurs 114 et 118 sont réalisés dans et sur des puces distinctes.

Un avantage de l'architecture exposée en relation avec la figure 2 tient au fait que le deuxième microcontrôleur 118 sécurisé n'intervient pas dans la ou les communications avec l'extérieur de la carte 100. Cela permet par exemple d'utiliser un microcontrôleur 118 doté d'une configuration matérielle et/ou logicielle identique dans des cartes à microcircuit 100 visant des applications différentes les unes des autres.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la personne du métier est en mesure d'adapter les modes de réalisation décrits à une carte à microcircuit 100 ne comportant qu'un seul module de communication.

Enfin, la mise en œuvre pratique des modes de réalisation et variantes décrits est à la portée de la personne du métier à partir des indications fonctionnelles données ci-dessus. En particulier, la mise en œuvre pratique des modules de communication 110 et 112, des microcontrôleurs 114 et 118 ainsi que du capteur biométrique 122 est à la portée de la personne du métier à partir des indications ci-dessus.

La personne du métier est par ailleurs en mesure, à partir des indications fournies ci-dessus, d'adapter les caractéristiques de la communication radiofréquence en fonction de l'application visée. En particulier, la personne du métier est capable d'adapter les modes de réalisation ci-dessus pour se conformer aux exigences de la norme ISO 14443 du secteur bancaire.

## Revendications

1. Carte à microcircuit (100) comportant :
- un premier microcontrôleur (114) ;
- un deuxième microcontrôleur (118) ;
- au moins un module (110, 112) de communication avec l'extérieur de la carte ; et
- un capteur biométrique (122),
dans laquelle toute communication avec l'extérieur de la carte (100) transite par le premier microcontrôleur (114) et toute communication entre le capteur (122) et le deuxième microcontrôleur (118) transite par le premier microcontrôleur (114), **caractérisée en ce que** le deuxième microcontrôleur (118) n'intervient pas dans les communications avec l'extérieur de la carte (100).

2. Carte selon la revendication 1, dans laquelle le deuxième microcontrôleur (118) est un microcontrôleur sécurisé.

3. Carte selon la revendication 1 ou 2, dans laquelle le deuxième microcontrôleur (118) est dédié à traiter et à mémoriser des données sécurisées.

4. Carte selon l'une quelconque des revendications 1 à 3, dans laquelle le deuxième microcontrôleur (118) possède une capacité mémoire inférieure à celle du premier microcontrôleur (114).

5. Carte selon l'une quelconque des revendications 1 à 4, dans laquelle le premier microcontrôleur (114) est relié, de préférence connecté, à deux modules de communication vers l'extérieur de la carte (100) :
un premier module (110) de communication en champ proche ; et
un deuxième module (112) de communication avec contact.

6. Carte selon l'une quelconque des revendications 1 à 5, dans laquelle le premier microcontrôleur (114) est configuré pour mettre en œuvre :
un protocole de communication en champ proche ; et
un protocole de communication avec contact.

7. Carte selon l'une quelconque des revendications 1 à 6, dans laquelle le premier microcontrôleur (114) comporte :
une unité (200) de gestion d'énergie ; et
une unité (202) de séquençage d'opérations.

8. Carte selon l'une quelconque des revendications 1 à 7, dans laquelle le premier microcontrôleur (114) est configuré pour commander :
le deuxième microcontrôleur (118) ;
le module de communication (110, 112) ; et
le capteur (122).

9. Carte selon l'une quelconque des revendications 1 à 8, dans laquelle le premier microcontrôleur (114) est configuré pour gérer une alimentation électrique du deuxième microcontrôleur (118).

10. Carte selon l'une quelconque des revendications 1 à 9, dans laquelle le premier microcontrôleur (114) est configuré pour traiter des données provenant du capteur (122) .

11. Carte selon l'une quelconque des revendications 1 à 10, dans laquelle le premier microcontrôleur (114) et le deuxième microcontrôleur (118) font partie d'une même puce.

12. Carte selon l'une quelconque des revendications 1 à 11, dans laquelle le capteur (122) est un capteur d'empreintes digitales.

## Patentansprüche

1. Eine Mikroschaltungskarte (100), die Folgendes aufweist:
einen ersten Mikrocontroller (114);
einen zweiten Mikrocontroller (118);
mindestens ein Modul (110, 112) zur Kommunikation mit der Außenseite der Karte; und
einen biometrischen Sensor (122),
wobei jede Kommunikation mit der Außenseite der Karte (100) über den ersten Mikrocontroller (114) läuft und jede Kommunikation zwischen dem Sensor (122) und dem zweiten Mikrocontroller (118) über den ersten Mikrocontroller (114) läuft, **dadurch gekennzeichnet, dass** der zweite Mikrocontroller (118) nicht an der Kommunikation mit der Außenseite der Karte (100) beteiligt ist.

2. Karte nach Anspruch 1, wobei der zweite Mikrocontroller (118) ein sicherer Mikrocontroller ist.

3. Karte nach Anspruch 1 oder 2, wobei der zweite Mikrocontroller (118) der Verarbeitung und Speicherung sicherer Daten gewidmet ist.

4. Karte nach einem der Ansprüche 1 bis 3, wobei der zweite Mikrocontroller (118) eine kleinere Speicherkapazität als der erste Mikrocontroller (114) hat.

5. Karte nach einem der Ansprüche 1 bis 4, wobei der erste Mikrocontroller (114) mit zwei Modulen zur Kommunikation mit der Außenseite der Karte (100) gekoppelt, vorzugsweise verbunden, ist:
einem ersten Nahfeld-Kommunikationsmodul (110); und
einem zweiten Kontakt-Kommunikationsmodul (112).

6. Karte nach einem der Ansprüche 1 bis 5, wobei der erste Mikrocontroller (114) konfiguriert ist zum Implementieren
eines Nahfeld-Kommunikationsprotokolls; und
eines Kontakt-Kommunikationsprotokolls.

7. Karte nach einem der Ansprüche 1 bis 6, wobei der erste Mikrocontroller (114) Folgendes aufweist:
eine Energieverwaltungseinheit (200); und
eine Operationen-Sequenzierungseinheit (202).

8. Karte nach einem der Ansprüche 1 bis 7, wobei der erste Mikrocontroller (114) konfiguriert ist zum Steuern
des zweiten Mikrocontrollers (118);
des Kommunikationsmoduls (110, 112); und
des Sensors (122).

9. Karte nach einem der Ansprüche 1 bis 8, wobei der erste Mikrocontroller (114) konfiguriert ist zum Managen einer elektrischen Stromversorgung des zweiten Mikrocontrollers (118).

10. Karte nach einem der Ansprüche 1 bis 9, wobei der erste Mikrocontroller (114) konfiguriert ist zum Verarbeiten von Daten, die von dem Sensor (122) stammen.

11. Karte nach einem der Ansprüche 1 bis 10, wobei der erste Mikrocontroller (114) und der zweite Mikrocontroller (118) Teil eines gleichen Chips bilden.

12. Karte nach einem der Ansprüche 1 bis 11, wobei der Sensor (122) ein Fingerabdrucksensor ist.

## Claims

1. A microcircuit card (100) comprising:
a first microcontroller (114);
a second microcontroller (118);
at least one module (110, 112) of communication with the outside of the card; and
a biometric sensor (122),
wherein any communication with the outside of the card (100) transits through the first microcontroller (114) and any communication between the sensor (122) and the second microcontroller (118) transits through the first microcontroller (114), **characterized in that** the second microcontroller (118) is not involved in the communications with the outside of the card (100).

2. The card according to claim 1, wherein the second microcontroller (118) is a secure microcontroller.

3. The card according to claim 1 or 2, wherein the second microcontroller (118) is dedicated to processing and storing secure data.

4. The card according to any of claims 1 to 3, wherein the second microcontroller (118) has a memory capacity smaller than that of the first microcontroller (114).

5. The card according to any of claims 1 to 4, wherein the first microcontroller (114) is coupled, preferably connected, to two modules of communication with the outside of the card (100):
a first near-field communication module (110); and
a second contact communication module (112).

6. The card according to any of claims 1 to 5, wherein the first microcontroller (114) is configured to implement:
a near-field communication protocol; and
a contact communication protocol.

7. The card according to any of claims 1 to 6, wherein the first microcontroller (114) comprises:
a power management unit (200); and
an operations sequencing unit (202).

8. The card according to any of claims 1 to 7, wherein the first microcontroller (114) is configured to control:
the second microcontroller (118);
the communication module (110, 112); and
the sensor (122).

9. The card according to any of claims 1 to 8, wherein the first microcontroller (114) is configured to manage an electric power supply of the second microcontroller (118) .

10. The card according to any of claims 1 to 9, wherein the first microcontroller (114) is configured to process data originating from the sensor (122).

11. The card according to any of claims 1 to 10, wherein the first microcontroller (114) and the second microcontroller (118) form part of a same chip.

12. The card according to any of claims 1 to 11, wherein the sensor (122) is a fingerprint sensor.
